(19) Europäisches Patentamt
European Patent Office
Office européen des brevets

(11) Veröffentlichungsnummer: **0 549 626 B1**

(12) **EUROPÄISCHE PATENTSCHRIFT**

(45) Veröffentlichungstag der Patentschrift: **02.11.94**

(51) Int. Cl.5: **C08G 18/10**, C08G 18/28, C08G 18/83, C09J 175/04, C09K 3/10

(21) Anmeldenummer: **91915851.9**

(22) Anmeldetag: **09.09.91**

(86) Internationale Anmeldenummer: **PCT/EP91/01712**

(87) Internationale Veröffentlichungsnummer: **WO 92/05212 (02.04.92 92/08)**

# (54) FEUCHTIGKEITSHÄRTENDE, ALKOXYSILANTERMINIERTE POLYURETHANE.

(30) Priorität: **18.09.90 DE 4029505**

(43) Veröffentlichungstag der Anmeldung: **07.07.93 Patentblatt 93/27**

(45) Bekanntmachung des Hinweises auf die Patenterteilung: **02.11.94 Patentblatt 94/44**

(84) Benannte Vertragsstaaten: **AT BE CH DE DK ES FR GB GR IT LI LU NL SE**

(56) Entgegenhaltungen:
**EP-A- 0 170 865**
**EP-A- 0 261 409**
**EP-A- 0 371 370**
**DE-C- 2 738 979**

(73) Patentinhaber: **Henkel Kommanditgesellschaft auf Aktien**

**D-40191 Düsseldorf (DE)**

(72) Erfinder: **EMMERLING, Winfried**
**Am Backes 1**
**D-4040 Neuss (DE)**
Erfinder: **PODOLA, Tore**
**Deusserstr. 31**
**D-4019 Monheim (DE)**
Erfinder: **UNGER, Lothar**
**Kiefernstr. 2**
**D-4006 Erkrath 2 (DE)**
Erfinder: **MAJOLO, Martin**
**St. Martinusstra e 33**
**D-5140 Erkelenz (DE)**

**EP 0 549 626 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft feuchtigkeitshärtende, alkoxysilanterminierte Polyurethane und ihre Verwendung in Klebe- und Dichtungsmassen.

Alkoxysilanterminierte, feuchtigkeitshärtende Einkomponenten-Polyurethane werden in zunehmendem Maße als weichelastische Beschichtungs-, Dichtungs- und Klebemasse im Bauwesen und in der Automobilindustrie verwendet. Bei diesen Anwendungen werden hohe Anforderungen an das Dehn-, Adhäsionsvermögen und an die Aushärtegeschwindigkeit gestellt. Aus der DE-OS-27 38 979 ist ein Verfahren zur Herstellung von vernetzbaren Polyurethan-Prepolymeren mit endständigen Alkoxysilangruppen bekannt. Unter Einwirkung von Feuchtigkeit härten diese Prepolymeren bei Raumtemperatur zu elastischen Produkten mit guten mechanischen Eigenschaften und guter Haftung aus. Diese Produkte weisen jedoch den Nachteil auf, daß ihre Aushärtungsgeschwindigkeit,insbesondere in den in der Praxis überwiegend vorkommenden Schichtdicken nicht den Anforderungen entspricht. Zudem zeigen sie langsame Hautbildung, so daß die Oberflächen lange klebrig bleiben und sich Schmutzteilchen auf ihnen ablagern können, wodurch sowohl ihre mechanischen Eigenschaften, als auch das äußere Erscheinungsbild beeinträchtigt werden.

In der EP 170 865 wird ein Verfahren zur Herstellung von unter Feuchtigkeitsausschluß lagerstabilen, weichelastischen Kunstharzmassen auf Basis von NCO-Gruppen enthaltenden Polyurethan-Prepolymeren und Alkoxysilanen beschrieben. Nach diesem Verfahren werden die NCO-terminierten Polyurethane zunächst mit Ethoxygruppen enthaltenden Alkoxysilanen und anschließend gegebenenfalls mit üblichen Kettenverlängerern oder Kettenabbrechern umgesetzt. Obgleich die nach diesem Verfahren hergestellten alkoxysilanterminierten Polyurethane eine schnelle Hautbildung und gute Durchhärtungsgeschwindigkeiten aufweisen, zeigen die unausgehärteten Massen für praxisgerechtes Arbeiten verbesserungsbedürftige Lagerstabilitäten.

Aus der DE-OS-36 29 237 sind alkoxysilanterminierte, feuchtigkeitshärtende Polyurethane bekannt, die durch Umsetzung von NCO-terminierten Polyurethan-Prepolymeren mit einer NCO-Funktionalität von mindestens 1 und weniger als 2 und Aminoalkyl-, Mercaptoalkyl- oder Epoxyalkyl-Alkoxysilanen mit Polyethoxyeinheiten erhältlich sind. Diese Produkte neigen jedoch wie die der EP 170 865 zu Lagerinstabilitäten, vor allem wenn durch häufigen Gebrauch Luftfeuchtigkeit zu der beispielsweise in der Tube verbleibenden Masse tritt. Schließlich wird in einem der Beispiele der DE-OS-36 29 237 die Umsetzung eines NCO-terminierten Polyurethan-Prepolymers mit einem theoretischen NCO-Gehalt von 0,76 % und Mercaptopropyltrimethoxysilan beschrieben. Die erhaltenen Mercaptopropyltrimethoxysilan-terminierten Polyurethane haben aber den Nachteil, daß sie nach längerer Lagerzeit einen Reaktivitätsverlust erleiden, der sich in Form von verzögerter Hautbildung und Durchhärtung äußert.

Aufgabe der vorliegenden Erfindung war es daher, feuchtigkeitshärtende, alkoxysilanterminierte Polyurethane zu entwickeln, die die Nachteile des Standes der Technik überwinden.

Diese Aufgabe wird erfindungsgemäß durch feuchtigkeitshärtende, alkoxysilanterminierte Polyurethane gelöst, die erhältlich sind indem man in einem ersten Verfahrensschritt Polyurethan-Prepolymere mit einer mittleren NCO-Funktionalität von mindestens 1 und weniger als 2 durch

a) Umsetzung von OH-terminierten Polyolen mit Diisocyanaten zu NCO-terminierten Polyurethan-Prepolymeren mit einer mittleren NCO-Funktionalität von mindestens 2 und anschließender Umsetzung eines Teils der verbliebenen NCO-Gruppen mit Monoalkylpolyetheralkoholen und/oder mit linearen oder verzweigten aliphatischen, monofunktionellen Alkoholen mit 1 bis 18 C-Atomen oder

a') Umsetzung von OH-terminierten Polyolen mit einem Gemisch von Mono- und Diisocyanaten

herstellt und in einem zweiten Verfahrensschritt im wesentlichen sämtliche freien NCO-Gruppen der nach a) und/oder a') erhaltenen Polyurethan-Prepolymeren mit Alkoxysilanen umsetzt, dadurch gekennzeichnet, daß die Alkoxysilane die allgemeine Formel

$$X - (CH_2)_n - \underset{\displaystyle R}{\underset{|}{Si}} - (OR^1)_2$$

aufweisen, in der

X = NHR$^2$,

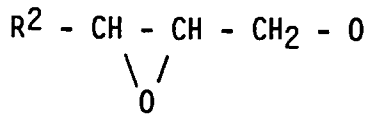

und/oder
$(NH - CH_2 - CH_2)_m - NHR^2$

R = $- CH_3$, $- CH_2H_5$ und/oder $OR^1$

$R^1$ = ein aliphatischer, cycloaliphatischer und/oder aromatischer Kohlenwasserstoffrest mit 1 bis 10 C-Atomen

$R^2$ = H und/oder ein aliphatischer, cycloaliphatischer und/oder aromatischer Kohlenwasserstoffrest mit 1 bis 10 C-Atomen

n = 2 bis 6

m = 1 oder 2 bedeuten.

Die als Zwischenprodukt anfallenden NCO-terminierten Polyurethan-Prepolymere werden unter Einsatz von OH-terminierten Polyolen gewonnen. Im Rahmen der Erfindung werden Polyole aus der Gruppe der Polyetherpolyole, Polyesterpolyole, Polyalkylendiole und/oder Polyacetale mit 2 oder mehreren freien OH-Gruppen eingesetzt. Die genannten Polyole und ihre Herstellung sind aus dem Stand der Technik bekannt. So können beispielsweise Polyesterpolyole durch Reaktion von Dicarbonsäuren mit Triolen oder einem Überschuß an Diolen und/ oder Triolen sowie durch Ringöffnung von epoxydierten (Fett-)Estern mit Alkoholen hergestellt werden. Auch Polycaprolactondiole, herstellbar aus $\epsilon$-Caprolacton und Diolen, sind als Polyesterpolyole geeignet. Im Rahmen der Erfindung werden Polyesterpolyole bevorzugt aus niedermolekularen Dicarbonsäuren wie Adipinsäure, Isophthalsäure, Terephthalsäure und Phthalsäure mit einem Überschuß an Diolen mit 2 - 12 Kohlenstoffatomen, Trimethylolpropan und/oder Glycerin. Als Polyacetale seien beispielsweise die Polykondensationsprodukte aus Formaldehyd und Diolen und/oder Polyolen in Gegenwart saurer Katalysatoren genannt. Polyalkylendiole wie beispielsweise Polybutadiendiol sind käufliche Produkte, die in verschiedenen Molekulargewichten erhältlich sind. Polyetherpolyole können beispielsweise durch Co- oder Blockpolymerisation von Alkylenoxiden wie Ethylenoxid, Propylenoxid und Butylenoxid oder durch Umsetzung von Polyalkylenglykolen mit 2 oder 3 funktionellen Alkoholen erhalten werden. Aber auch die polymerisierten Ringöffnungsprodukte von Tetrahydrofuran mit Alkoholen sind als Polyetherpolyole geeignet. Entsprechend einer bevorzugten Ausführungsform in der vorliegenden Erfindung werden Alkoxylierungs-, insbesondere Ethoxylierungs-und/oder Propoxylierungsprodukte di- oder trifunktioneller Alkohole ausgewählt aus der Gruppe von Ethylenglykol, Diethylenglykol, Triethylenglykol, 1,2-Propandiol, Dipropylenglykol, den Butandiolen, Hexandiolen, Octandiolen, technische Gemische von Hydroxyfettalkoholen mit 14 - 22 C-Atomen, insbesondere Hydroxystearylalkohol, Trimethylolpropan und Glycerin gebildeten Gruppen eingesetzt. Durch Auswahl entsprechender Alkohole kann man dem alkoxysilanterminierten Polyurethan einen mehr hydrophoben oder hydrophilen Charakter geben. So ist es möglich, durch überwiegende Addition von Propylenoxid an mehrfunktionelle Alkohole ein überwiegend hydrophobes Molekül zu erhalten, während man bei der Zudosierung bzw. ausschließlicher Oxalkylierung mit Ethylenoxid hydrophilere Moleküle erhält. Zudem kann man über die Auswahl der Alkohole die Viskosität der Polyurethan-Prepolymeren und damit ihre Verarbeitbarkeit beeinflussen.

Vergleichsweise niedrige Viskositätswerte und damit eine hervorragende Verarbeitbarkeit werden bei Einsatz von linearen OH-terminierten Diolen, insbesondere von Polypropylenglykolen erreicht. Bevorzugt im Rahmen der Erfindung werden Polyole mit einem mittleren Molekulargewicht von 300 bis 6000, vorzugsweise von 500 bis 4000 und insbesondere lineare Diole mit solchen Molekulargewichten. Ganz besonders bevorzugt werden Polypropylenglykole mit einem mittleren Molekulargewicht von 500 bis 4000, wobei selbstverständlich auch Mischungen von Polypropylenglykol mit verschiedenen Molekulargewichten eingesetzt werden können. Um nach der Aushärtung der alkoxylsilanterminierten Polyurethan für die Praxis genügend hohe Festigkeitswerte zu erhalten, sollte der Anteil an Polypropylenglykol mit hohen Molekulargewichten beschränkt sein. Vorzugsweise enthalten Mischungen von Polypropylenglykol mit verschiedenen Molekulargewichten, Polypropylenglykol mit Molekulargewichten über 4000 unter 75 Gew.-% - bezogen auf Polyolmischung. Zum anderen können die Polypropylenglykole mit einem oder mehreren der aufgezählten Polyole, vorzugsweise mit linearen Diolen abgemischt werden. Für möglichst weichelastische Massen wird jedoch ein hoher Anteil an Polypropylenglykol, vorzugsweise über 75 Gew.-% bezogen auf Polyolmischung bevorzugt.

Die genannten Hydroxylgruppen enthaltenden Polyolen werden in bekannter Weise mit Isocyanaten in NCO-terminierten Polyurethan-Prepolymeren überführt. Entsprechend der einen Ausführungsform der vorliegenden Erfindung werden die OH-terminierten Polyole mit Diisocyanaten zu NCO-terminierten Polyurethan-Prepolymeren mit einer mittleren NCO-Funktionalität von mindestens 2 umgesetzt. Als Diisocyanate kommen aromatische Diisocyanate wie 2,4- und 2,6-Toluylendiisocyanat, 1,5-Naphthalindiisocyanat, 4,4-Diphenylmethandiisocyanat, 3,3-Dimethoxy-4,4-Diphenylisocyanat und/oder Xylylendiisocyanate in Betracht. Als aliphatische Diisocyanate sind insbesondere 1,4-Tetramethylendiisocyanat, 1,6-Hexamethylendiisocyanat, Decan-1,10-diisocyanat, 2,2,4-Trimethylhexamethylendiisocyanat, Dicyclohexylmethandiisocyanat, Tetramethylenxylylendiisocyanate, Isophorondiisocyanat und/oder die technischen Isocyanate, welche bei der Phosgenierung aus den Aminen erhältlich sind, die durch Hydrieren von Dimerfettsäurenitrilen anfallen, geeignet. Für die Anwendungsbereiche, in denen die alkoxysilanterminierten Polyurethane Silicone ersetzen sollen, empfehlen sich aliphatische Diisocyanate und insbesondere Trimethylhexamethylendiisocyanat.

Die entsprechend dieser Ausführungsform erhaltenen Polyurethan-Prepolymeren mit einer mittleren NCO-Funktionalität von mindestens 2 werden anschließend mit linearen oder verzweigten aliphatischen, monofunktionellen Alkoholen mit 1 - 18 C-Atomen und/ oder Monoalkylpolyetheralkoholen zu einem Polyurethan-Prepolymer mit einer mittleren NCO-Funktionalität von mindestens 1 und weniger 2 umgesetzt. Als lineare oder verzweigte aliphatische, monofunktionelle Alkohole sind insbesondere Methanol, Ethanol, Isomere des Propanols, Butanols und/oder Hexanols sowie Fettalkohole mit 8 - 18 C-Atomen wie Octanol, Decanol, Dodecanol, Tetradecanol, Hexadecanol und/oder Octadecanol einsetzbar. Die Fettalkohole sind beispielsweise durch Reduktion von natürlichen Fettsäuren erhältlich und können sowohl als Reinsubstanzen als auch in Form ihrer technischen Gemische eingesetzt werden. Bevorzugt werden lineare Monoalkohole und insbesondere solche mit 4 - 18 C-Atomen, da die niederen Alkohole sich nur schwer wasserfrei herstellen lassen. Anstelle der linearen oder verzweigten aliphatischen Alkohole oder in Abmischung mit diesen sind auch Monoalkylpolyetheralkohole unterschiedlichen Molekulargewichts, vorzugsweise in den Molekulargewichtsbereichen von 1000 - 2000, einsetzbar. Bevorzugt wird Monobutylpropylenglykol alleine oder in Abmischung mit aliphatischen linearen Alkoholen mit 4 - 18 C-Atomen.

In einer weiteren Ausführungsform der vorliegenden Erfindung werden die OH-terminierten Polyole mit einer Mischung von Mono- und Diisocyanaten zu NCO-terminierten Polyurethan-Prepolymeren mit einer mittleren NCO-Funktionalität von wenigstens 1 und weniger 2 umgesetzt. Die Mischungen enthalten neben den bereits oben beschriebenen Diisocyanate abgemischt Monoisocyanate, vorzugsweise aromatische Monoisocyanate wie Phenylisocyanat, Toluylisocyanat und/oder Naphthylenisocyanat. Die als Zwischenprodukte erhaltenen Polyurethan-Prepolymere weisen eine NCO-Funktionalität von mindestens 1 und weniger als 2 nach beiden Ausführungsformen auf. Je kleiner die NCO-Funktionalität der NCO-terminierten Polyurethan-Prepolymeren ist, desto weicher lassen sich die ausgehärteten silanisierten Endprodukte einstellen. Zweckmäßigerweise liegt daher das Zahlenmittel der NCO-Funktionalität der NCO-terminierten Polyurethan-Prepolymeren zwischen 1,2 und 1,8.

Die nach beiden Ausführungsformen erhaltenen NCO-terminierten PolyurethanPrepolymeren werden in einem zweiten Verfahrensschritt mit Alkoxysilanen der allgemeinen Formel

$$X - (CH_2)_n - \underset{\underset{\displaystyle R}{|}}{Si} - (OR^1)_2$$

in der

X = $NHR^2$,

$$\begin{array}{l} R^2 - CH - CH - CH_2 - O \\ \qquad\quad \diagdown\ \diagup \\ \qquad\qquad O \end{array}$$

und/oder

$(NH - CH_2 - CH_2)_m - NHR^2$

R = $- CH_3$, $- CH_2H_5$ und/oder $OR^1$

$R^1$ = ein aliphatischer, cycloaliphatischer und/oder aromatischer Kohlenwasserstoffrest mit 1 bis 10 C-Atomen

$R^2$ = H und/oder ein aliphatischer, cycloaliphatischer und/oder aromatischer Kohlenwasserstoffrest mit 1 bis 10 C-Atomen
n = 2 bis 6
m = 1 oder 2

umgesetzt. Die Alkoxysilane der vorstehenden Formel sind an sich bekannte Produkte. So wird die Herstellung der Aminoalkylalkoxysilane und der N-(aminoalkyl)aminoalkylalkoxysilane in den französischen Patenten 11 40 301, 11 89 988, 12 17 009 und 12 54 063 sowie in der Monographie "Silan Cuppling Agents" von Plueddemann, Plenum Press, New York (1982), S. 29 - 45, beschrieben. In der Regel werden aminoorganofunktionelle Alkoxysilane durch Umsetzung von Haloalkylalkoxysilanen mit Ammoniak bzw. Aminen oder durch Hydrierung von Cyanoalkylalkoxysilanen gewonnen.

Epoxyalkylalkoxysilane werden ebenfalls in der Monografie von Plueddemann beschrieben und sind beispielsweise erhältlich durch Addition von Alkoxysilanen an ungesättigte Epoxide oder durch Epoxidierung von Alkylenalkoxysilanen. Im Rahmen der Erfindung können gleiche oder verschiedene Aminoalkylalkoxysilane, N-(aminoalkyl)aminoalkylalkoxysilane und/oder Epoxyalkylalkoxysilane umgesetzt werden, bevorzugt werden solche Alkoxysilane, in denen X für die $NHR^2$-Gruppe steht und $R^2$ = H bedeutet, d. h. die Gruppe der Aminoalkylalkoxysilane. Von den Aminoalkylalkoxysilanen eignen sich insbesondere ($\beta$-aminoethyl)trimethoxysilan, ($\gamma$-aminopropyl)trimethoxysilan, ($\beta$-aminoethyl)methyldimethoxysilan, ($\gamma$-aminopropyl)-methyldimethoxysilan, ($\beta$-aminomethyl)trimethoxysilan, ($\gamma$-aminopropyl)triethoxysilan, ($\beta$-aminoethyl)-methyldiethoxysilan und/oder ($\gamma$-aminopropyl)methyldiethoxysilan. Über die Art der Reste R und $R^1$ lassen sich die Reaktivitäten der alkoxysilanterminierten Polyurethane steuern. Besonders gute Reaktivitäten werden erhalten, wenn der Rest R die Bedeutung $OR^1$ innehat, d. h. wenn es sich um aminofunktionelle Trialkoxysilane handelt. Zudem kann die Reaktivität über die Alkoxygruppe weitergesteuert werden. So lassen sich die bevorzugten Aminoalkoxysilane bedeutend schneller aushärten, wenn der Rest $R^1$ ein aliphatischer, kurzkettiger Kohlenwasserstoffrest ist. Ganz besonders bevorzugt werden daher ($\beta$-aminoethyl)trimethoxysilan und/ oder ($\gamma$-aminopropyl)trimethoxysilan.

Die Umsetzung der NCO-terminierten Polyurethan-Prepolymere mit den Alkoxysilanen der obengenannten Formel erfolgt vorzugsweise in Anwesenheit von Katalysatoren, wie sie z. B. aus der US 36 27 722 bekannt sind. Bevorzugt werden als Katalysatoren Zinn und/oder Titanverbindungen, insbesondere Dibutylzinndilaurat.

Ein weiterer Gegenstand der vorliegenden Erfindung betrifft die Verwendung der feuchtigkeitshärtenden, alkoxysilanterminierten Polyurethane als Dichtungs- oder Klebemassen. Bei der Verwendung der feuchtigkeitshärtenden, alkoxysilanterminierten Polyurethanen können übliche Zusatzstoffe wie Pigmente, Füllstoffe, Härtungskatalysatoren, Farbstoffe, Weichmacher, Verdickungsmittel, Haftvermittler, Streckmittel und UV-Stabilisatoren beigemengt werden. Als Füllstoffe eignen sich gegebenüber Isocyanate inerte anorganische Verbindungen, wie z. B. Kreide, Kalkmehl, gefällte und/oder pyrogene Kieselsäure, Aluminiumsilikate, gemahlene Mineralstoffe sowie andere dem Fachmann geläufige anorganische Füllstoffe. Zudem können auch organische Füllstoffe eingesetzt werden, insbesondere Faserkurzschnitte und dergleichen. Für einige Anwendungsgebiete werden Füllstoffe bevorzugt, die den Zubereitungen Thixotropie verleihen, wie z. B. quellbare Kunststoffe. Die Einsatzmengen der üblichen Zusatzstoffe bewegen sich in Mengenbereichen, die für den Fachmann geläufig sind.

Zur Beschleunigung der Härtung können organische oder anorganische Verbindungen, wie z. B. Dibutylzinndiacetat, Dibutylzinndilaurat und/oder Tetrabutyldioleatodistannoxan in geringen Mengen als Katalysatoren zugegeben werden. Zur Beschleunigung der Aushärtung können neben den Aushärtungskatatlysatoren noch geringe Anteile an Aminen wie ($\beta$-aminoethylaminopropyl)trimethoxysilan und/oder Laurylamin zugegeben werden. Über die Zusatzmenge an Härtungskatalysatoren und ggf. Aminen läßt sich die Aushärtungsgeschwindigkeit in weiten Bereichen entsprechend den Anwendungsgebieten einstellen.

## Beispiele

### Beispiel 1

In einem beheizbaren Rührkessel wurden unter Stickstoffatmosphäre 1000 Teile (= 1 Äquivalent) Polypropylenglykol mit einem mittleren Molekulargewicht von 2000 und 130,5 Teile (= 1,5 Äquivalente) Toluylendiisocyanat (TDI) zusammen mit 0,33 Teile Dibutylzinndilaurat (DBTL) bei 90 °C unter Rühren umgesetzt. Nach ca. 4,5 Stunden war der theoretische Wert von 1,88 % NCO-Gruppen erreicht. Anschließend wurden 147 Teile Polypropylenglykolmonobutylether (MG 735) ) ≙ 0,2 Äquivalente) zugegeben und 6 Stunden gerührt bis zu einem theoretischen NCO-Gehalt von 1,0 %. Danach wurde auf 60 °C abgekühlt und 53,7 Teile (=0,3 Äquivalente) Aminopropyltrimethoxysilan so langsam zugegeben, daß eine Innentemperatur von 80 °C nicht überschritten wurde. Anschließend wurde der Reaktionsansatz ca. 30 Minuten nachgerührt. Der freie NCO-Gehalt des alkoxysilanterminierten Polyurethans ist kleiner als 0,03 %. Die Viskosität des Produkts beträgt bei 25 °C 80000 mP•s nach Brookfield.

**Beispiel 2**

In einem beheizbaren Rührkessel wurden unter Stickstoffatmosphäre 500 Teile (= 0,5 Äquivalente) Polypropylenglykol mit einem mittleren Molekulargewicht von 2000 und 1000 Teile (= 0,5 Äquivalente) Polypropylenglykol mit einem mittleren Molekulargewicht von 4000 sowie 136,5 Teile (≙ 1,3 Äquivalente) Trimethylhexamethylendiisocyanat (TMDI) zusammen mit 0,83 Teilen Dibutylzinndilaurat bei 100 °C unter Rühren umgesetzt. Nach etwa 5 Stunden war der theoretische NCO-Wert von 0,76 % erreicht. Danach wurden 73,5 Teile (≙ 0,1 Äquivalente) Polypropylenglykolmonobutylether (MG = 735) zugegeben und 2 Stunden gerührt bis ein theoretischer NCO-Gehalt von 0,5 % erreicht war. Analog Beispiel 1 wurde auf 60 °C abgekühlt, 35,8 Teile (0,2 Äquivalente) Aminopropyltrimethoxysilan zugegeben und 30 Minuten weitergerührt. Der freie NCO-Gehalt des alkoxysilanterminierten Polyurethans ist kleiner als 0,03 %. Die Viskosität des Produktes beträgt bei 25 °C 80000 mP•s nach Brookfield.

**Beispiel 3**

Analog Beispiel 1 wurden in einem beheizbaren Rührkessel 1000 Teile (= 1 Äquivalent) Polypropylenglykol mit einem mittleren Molekulargewicht von 2000 und 134,4 Teile Trimethylhexamethylendiisocyanat (= 1,28 Äquivalente) zusammen mit 0,6 Teile Dibutylzinndilaurat bei 90 °C unter Rühren umgesetzt. Nach ca. vier Stunden war der theoretische Wert von 1,04 % NCO-Gruppen erreicht. Danach wurden 102,9 Teile (≙ 0,14 Äquivalente) Polypropylenglykolmonobutylether (MG 735) zugegeben und 2 Stunden bei 90 °C gerührt bis zu einem theoretischen NCO-Gehalt von 0,5 %. Danach wurde auf 65 °C abgekühlt und 25,1 Teile (= 0,14 Äquivalente) Aminopropyltrimethoxysilan so langsam zugegeben, daß eine Temperatur von 80 °C nicht überschritten wurde. Es wurde ca. 30 Minuten weitergerührt. Der danach gemessene NCO-Gehalt war kleiner als 0,03 %. Die Viskosität des Produkts betrug bei 25 °C 150000 mP•s nach Brookfield.

**Vergleichsbeispiel 1**

In einem beheizbaren Rührkessel wurden unter Stickstoffatmosphäre 1000 Teile Polypropylenglykol (= 1 Äquivalent) mit einem mittleren Molekulargewicht von 2000 und 134,4 Teile Trimethylhexamethylendiisocyanat (= 1,28 Äquivalente) zusammen mit 0,6 Teilen Dibutylzinndilaurat bei 90 °C unter Rühren umgesetzt. Nach ca. 4 Stunden war der theoretische Wert von 1,04 % NCO-Gruppen erreicht. Danach wurden 102,9 Teile (≙ 0,14 Äquivalente) Polypropylenglykolmonobutylether (MG 735) zugegeben und 2 Stunden bei 90 °C gerührt bis zu einem theoretischen NCO-Gehalt von 0,5 %. Anschließend wurden 27,4 Teile Mercaptopropyltrimethoxysilan (= 0,14 Äquivalente) und 0,2 Teile Dibutylzinndilaurat zugegeben und der Ansatz 9 Stunden bei 90 °C gerührt. Der danach gemessene NCO-Gehalt ist kleiner 0,1 %. Die Viskosität des Produktes betrug bei 25 °C 90000 mP•S nach Brookfield.

**Vergleichsbeispiel 2**

Analog Beispiel 1 wurde aus Polypropylenglykol, Toluylendiisocyanat und Polypropylenglykolmonobutylether das gleiche Polyurethan-Prepolymer hergestellt. Im Unterschied zu Beispiel 1 wurden anstelle von Aminopropyltrimethoxysilan 133 Teile (=0,3 Äquivalente) Tris-2-(2-Methoxy-ethoxy)-ethoxy-)silyl-3-aminopropan

[Formel: $H_2N\text{-}CH_2\text{-}CH_2\text{-}CH_2\text{-}Si\text{-}[O(\text{-}CH_2\text{-}CH_2\text{-}O)_2CH_3]_3$]

so langsam zugegeben, daß eine Temperatur von 80 °C nicht überschritten wurde. Anschließend wurde 30 Minuten nachgerührt. Der danach gemessene NCO-Gehalt war kleiner als 0,03 %. Die Viskosität des Produkts betrug bei 25 °C 60000 mPa•s nach Brookfield.

**Beispiel 4**

Aus den alkoxysilanterminierten Polyurethanen nach Beispiel 3 sowie nach Vergleichsbeispiel 1 wurden Fugendichtungsmassen hergestellt. Dazu wurden in einem Vakuumplanetendissolver 29 Gewichtsteile des

jeweiligen alkoxysilanterminierten Polyurethans mit 16 Teilen eines handelsüblichen Weichmachers (Santicizer - 261(R) der Firma Monsanto -. Phthalsäureoctylbenzylester) und 3 Teilen Vinyltrimethoxysilan sowie 2,1 Teile Xylol bei Zimmertemperatur verrührt. Die Masse wurde mit 42 Teilen Kreide, 6 Teilen Titandioxid, 0,3 Teilen Benztriazol (UV-Absorber), 0,3 Teilen eines Antioxidanten (Tinuvin - 765) versetzt und unter Vakuum (25 mbar) bei 2000 bis 3000 Umdrehungen pro Minute so lange gerührt, bis eine homogene glatte Masse entstand. Anschließend wurde die Masse mit 0,2 Teilen 1-Dodecylamin, 1 Teil Aminotrimethoxysilan (Trocknungsmittel) und 0,1 Teilen Dibutylzinndilaurat als Aushärtungskatalysatormischung unter Vakuum verrührt und in eine Kartusche abgefüllt. Von beiden Fugendichtungsmassen wurde die Hautbildungszeit sofort nach Herstellung und nach 10 Monaten sowie deren Oberflächenklebrigkeit geprüft. Die Bestimmung der Hautbildungszeit erfolgte durch eine sensitive Prüfung, wobei die Fugendichtungsmasse in Raupenform (Durchmesser 1 cm, Länge 15 cm) aufgespritzt worden war. Während der Aushärtung wurde die Fugendichtungsmasse unter klimatisierten Bedingungen (23 °C, 50 % Luftfeuchte) gelagert. Auch die Oberflächenklebrigkeit erfolgte durch eine sensitive Prüfung. Die vergleichenden Ergebnisse sind in Tabelle 1 zusammengefaßt. Sie zeigen sehr deutlich, daß die mercaptopropyltrimetoxysilanterminierten Polyurethane nach Lagerung einen Reaktivitätsverlust erleiden.

Tabelle 1

| | Mercaptoalkylalkoxysilan- terminierte PUR in Fugendichtungsmasse | Aminoalkylalkoxysilan- terminierte PUR in Fugendichtungsmasse |
|---|---|---|
| Hautbildung | | |
| direkt nach Herstellung | 2 Stunden | 25 Minuten |
| nach 10 Monaten | 4 Stunden | 25 Minuten |
| Klebefreiheit | | |
| direkt nach Herstellung | 4 Stunden | 30 Minuten |
| nach 10 Monaten | 25 Stunden | 30 Minuten |

**Beispiel 5**

Aus den alkoxysilanterminierten Polyurethanen nach Beispiel 1 und Vergleichsbeispiel 2 wurden Dichtungsmassen hergestellt. Dazu wurden 350 Teile des jeweiligen alkoxysilanterminierten Polyurethans mit 39 Teilen einer hydrophobierten Kieselsäure (Aerosil(R) R 974 der Fa. Degussa) 15 Minuten in einem Planetenkneter unter Vakuum gemischt. Anschließend erfolgte die Zugabe von 0,4 Teilen Dibutylzinndiacetat und ein weiteres Mischen von 10 Minuten.

Zur Überprüfung der Lagerstabilität wurden die in einem verschlossenen Behälter gelagerten Massen nach verschiedenen Zeiten auf ihren Viskositätsanstieg hin überprüft (25 °C nach Brookfield). In Tabelle 2 sind die Anfangsviskositäten und die Viskositäten der Dichtungsmassen nach verschiedenen Zeiträumen aufgeführt. Es ist eindeutig zu erkennen, daß die Massen auf Basis des Vergleichsbeispiels 2 höhere Viskositäten aufweisen, d. h., daß sie über einen längeren Zeitraum nicht lagerstabil sind.

Tabelle 2

| Dichtungsmassen | | | |
|---|---|---|---|
| | Anfangsviskosität d. Dichtungsmasse | Viskosität nach 1 Woche | Viskosität nach 3 Wochen |
| auf Basis von Bsp. 1 | 450 000 | 460 000 | 500 000 |
| auf Basis von Vgl.bsp. 2 | 700 000 | 1 100 000 | 2 000 000 |

## Patentansprüche

1. Alkoxysilanterminierte, feuchtigkeitshärtende Polyurethane, die erhältlich sind indem man in einem ersten Verfahrensschritt Polyurethan-Prepolymere mit einer mittleren NCO-Funktionalität von mindestens 1 und weniger als 2 durch

   a) Umsetzung von OH-terminierten Polyolen mit Diisocyanaten zu NCO-terminierten Polyurethan-Prepolymeren mit einer mittleren NCO-Funktionalität von mindestens 2 und anschließender Umsetzung eines Teils der verbliebenen NCO-Gruppen mit Monoalkylpolyetheralkoholen und/oder mit linearen oder verzweigten aliphatischen, monofunktionellen Alkoholen mit 1 bis 18 C-Atomen oder

   a') Umsetzung von OH-terminierten Polyolen mit einem Gemisch von Mono- und Diisocyanaten

   herstellt und in einem zweiten Verfahrensschritt im wesentlichen sämtliche freien NCO-Gruppen der nach a) und/oder a') erhaltenen Polyurethan-Prepolymeren mit Alkoxysilanen umsetzt, dadurch gekennzeichnet, daß die Alkoxysilane die allgemeine Formel

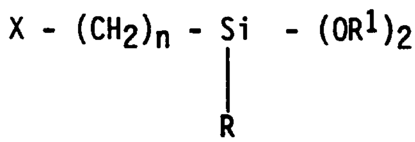

   aufweisen, in der

   X = $NHR^2$,

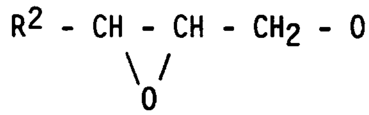

   und/oder $(NH - CH_2 - CH_2)_m - NHR^2$

   R = $- CH_3$, $- CH_2H_5$ und/oder $OR^1$

   $R^1$ = ein aliphatischer, cycloaliphatischer und/oder aromatischer Kohlenwasserstoffrest mit 1 bis 10 C-Atomen

   $R^2$ = H und/oder ein aliphatischer, cycloaliphatischer und/oder aromatischer Kohlenwasserstoffrest mit 1 bis 10 C-Atomen

   n = 2 bis 6

   m = 1 oder 2 bedeuten.

2. Alkoxysilanterminierte Polyurethane nach Anspruch 1, dadurch gekennzeichnet, daß sie unter Einsatz von Alkoxysilanen der allgemeinen Formel

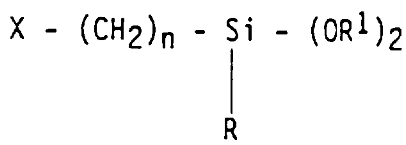

   in der X = $NHR^2$ und $R^2$ = H bedeutet, erhältlich sind.

3. Alkoxysilanterminierte Polyurethane nach einem der Ansprüche 1 oder 2, dadurch gekennzeichnet, daß sie erhältlich sind unter Einsatz von Alkoxysilanen aus der Gruppe der (β-Aminoethyl)trimethoxysilan, (γ-Aminopropyl)trimethoxysilan, (β-Aminoethyl)methyldimethoxysilan, (γ-Aminopropyl)-methyldimethoxysilan, (β-Aminomethyl)triethoxysilan, (γ-Aminopropyl)triethoxysilan, (β-Aminoethyl)-methyldiethoxysilan und/ oder (γ-Aminopropyl)methyldiethoxysilan.

**4.** Alkoxysilanterminierte Polyurethane nach einem der Ansprüche 1 bis 3, dadurch gekennzeichnet, daß die Polyurethan-Prepolymere unter Einsatz von Polyolen mit einem Molekulargewicht von 300 bis 6000 hergestellt worden sind.

**5.** Alkoxysilanterminierte Polyurethane nach einem der Ansprüche 1 bis 4, dadurch gekennzeichnet, daß die Polyurethan-Prepolymere unter Einsatz von linearen Diolen, insbesondere von Polypropylenglykolen, ggf. in Abmischung mit Polyetherpolyole, Polyesterpolyole, Polyacetale und/oder Polyalkylendiolen hergestellt worden sind.

**6.** Alkoxysilanterminierte Polyurethane nach einem der Ansprüche 1 bis 5, dadurch gekennzeichnet, daß die Polyurethan-Prepolymeren mit einer mittleren NCO-Funktionalität von mindestens 2 mit aliphatischen, monofunktionellen Alkoholen und/oder Monoalkylpolyetheralkoholen mit einem Molekulargewicht von 1000 bis 2000 umgesetzt worden sind.

**7.** Alkoxysilanterminierte Polyurethane nach einem der Ansprüche 1 bis 6, dadurch gekennzeichnet, daß die mittlere NCO-Funktionalität der NCO-terminierten Polyurethan-Prepolymere zwischen 1,2 und 1,8 liegt.

**8.** Verwendung der feuchtigkeitshärtenden alkoxysilanterminierten Polyurethane nach einem der Ansprüche 1 bis 7 als Dichtungsmassen und/oder Klebemassen, gegebenenfalls zusammen mit üblichen Zusatzstoffen wie Pigmenten, Füllstoffen, UV-Stabilisatoren, Härtungskatalysatoren und/oder Härtungsbeschleunigern.

**Claims**

**1.** Moisture-curing alkoxysilane-terminated polyurethanes obtainable by preparing polyurethane prepolymers having an average NCO functionality of at least 1 and less than 2 in a first step by

a) reaction of OH-terminated polyols with diisocyanates to form NCO-terminated polyurethane prepolymers having an average NCO functionality of at least 2 and subsequent partial reaction of the remaining NCO groups with monoalkyl polyether alcohols and/or with linear or branched aliphatic monofunctional alcohols containing 1 to 18 carbon atoms or

a') reaction of OH-terminated polyols with a mixture of mono- and diisocyanates

and reaction of substantially all the free NCO groups in the polyurethane prepolymers obtained in a) and/or a') with alkoxysilanes in a second process step, characterized in that the alkoxysilanes correspond to the following general formula:

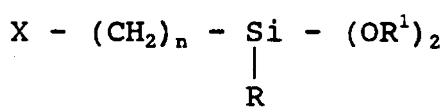

in which

X = $NHR^2$,

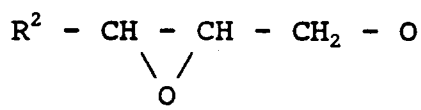

and/or $(NH - CH_2 - CH_2)_m - NHR^2$

R = $- CH_3$, $- CH_2H_5$ and/or $OR^1$

$R^1$ = an aliphatic, cycloaliphatic and/or aromatic hydrocarbon radical containing 1 to 10 carbon atoms

$R^2$ = H and/or an aliphatic, cycloaliphatic and/or aromatic hydrocarbon radical containing 1 to 10 carbon atoms

n = 2 to 6

m = 1 or 2.

2. Alkoxysilane-terminated polyurethanes as claimed in claim 1, characterized in that they are obtainable using alkoxysilanes corresponding to the following general formula:

$$X - (CH_2)_n - \underset{\substack{|\\ R}}{Si} - (OR^1)_2$$

in which X = $NHR^2$ and $R^2$ = H.

3. Alkoxysilane-terminated polyurethanes as claimed in claim 1 or 2, characterized in that they are obtainable using alkoxysilanes from the group consisting of ($\beta$-aminoethyl)-trimethoxysilane, ($\gamma$-aminopropyl)-trimethoxysilane, ($\beta$-aminoethyl)-methyl dimethoxysilane, ($\gamma$-aminopropyl)-methyl dimethoxysilane, ($\beta$-aminomethyl)-triethoxysilane, ($\gamma$-aminopropyl)-triethoxysilane, ($\beta$-aminoethyl)-methyl diethoxysilane and/or ($\gamma$-aminopropyl)-methyl diethoxysilane.

4. Alkoxysilane-terminated polyurethanes as claimed in any of claims 1 to 3, characterized in that the polyurethane prepolymers are produced using polyols having a molecular weight of 300 to 6000.

5. Alkoxysilane-terminated polyurethanes as claimed in any of claims 1 to 4, characterized in that the polyurethane prepolymers are produced using linear diols, particularly polypropylene glycols, optionally in admixture with polyether polyols, polyester polyols, polyacetals and/or polyalkylene diols.

6. Alkoxysilane-terminated polyurethanes as claimed in any of claims 1 to 5, characterized in that the polyurethane prepolymers having an average NCO functionality of at least 2 are reacted with aliphatic monofunctional alcohols and/or monoalkyl polyether alcohols having a molecular weight of 1000 to 2000.

7. Alkoxysilane-terminated polyurethanes as claimed in any of claims 1 to 6, characterized in that the average NCO functionality of the NCO-terminated polyurethane prepolymers is between 1.2 and 1.8.

8. The use of the moisture-curing alkoxysilane-terminated polyurethanes claimed in any of claims 1 to 7 as sealing compounds and/or adhesive compounds, optionally together with typical additives, such as pigments, fillers, UV stabilizers, curing catalysts and/or curing accelerators.

**Revendications**

1. Polyuréthannes durcissant à l'humidité, terminés par un alcoxysilane, qui sont accessibles, en ce que l'on produit dans une première étape de procédé des pré-polymères de polyuréthanne ayant une fonctionnalité en NCO moyenne d'au moins 1 et de moins de 2 par :

   a) réaction de polyols terminés par un OH avec des diisocyanates en pré-polymères de polyuréthannes terminés par un NCO ayant une fonctionnalité en NCO moyenne d'au moins 2 et réaction corrélative d'une partie des groupes NCO demeurés avec des monoalcoylpolyéther-alcools et/ou avec des alcools monofonctionnels aliphatiques linéaires ou ramifiés, ayant de 1 à 18 atomes de carbone, ou.

   a') réaction de polyols terminés par un OH avec un mélange de mono- et de diisocyanates.

   et dans une deuxième étape de procédé on fait réagir les groupes NCO libres essentiellement globaux des pré-polymères de polyuréthannes obtenus selon a) et/ou a') avec des alcoxysilanes, caractérisés en ce que les alcoxysilanes possèdent la formule générale :

$$X - (CH_2)n - \underset{\substack{|\\ R}}{Si} - (OR^1)_2$$

dans laquelle :

X = $NHR^2$ ,

```
R²  - CH₂ - CH - CH  - O
        \      /
          O
```

et/ou $(NH - CH_2 - CH_2)_m - NHR^2$

R = $- CH_3$, $- CH_2 H_5$ et/ou $OR^1$

$R^1$ = un radical hydrocarboné aliphatique, cycloaliphatique et/ou aromatique ayant de 1 à 10 atomes de carbone.

$R^2$ = H et/ou un radical hydrocarboné aliphatique, cycloaliphatique et/ou aromatique ayant de 1 à 10 atomes de carbone :

n = 2 à 6

m = 1 ou 2

**2.** Polyuréthannes terminés par un alcoxysilane selon la revendication 1, caractérisés en ce qu'ils sont accessibles par utilisation d'alcoxysilanes de formule générale :

```
X - (CH₂)n - Si  -  (OR¹)₂
             |
             R
```

dans laquelle X signifie $NHR_2$ et $R^2$ signifie H.

**3.** Polyuréthannes terminés par un alcoxysilane selon l'une des revendications 1 ou 2, caractérisés en ce qu'ils sont accessibles par utilisation d'alcoxysilanes choisis dans le groupe formé dues
($\beta$-aminoéthyl)triméthoxysilane,
($\gamma$-aminopropyl)triméthoxysilane,
($\beta$-aminoéthyl)méthyldiméthoxysilane,
($\gamma$-aminopropyl)méthyldiméthoxysilane,
($\beta$-aminométhyl)triéthoxysilane
($\gamma$-aminopropyl)triéthoxysilane
($\beta$-aminoéthyl)méthyldiéthoxysilane et/ou
($\gamma$-aminopropyl)méthyldiethoxysilane.

**4.** Polyuréthannes terminés par un alcoxysilane selon l'une des revendications 1 à 3, caractérisés en ce que les pré-polymères de polyuréthanne ont été produits par utilisation de polyols ayant un poids moléculaire allant de 300 à 6000.

**5.** Polyuréthannes terminés par un alcoxysilane selon l'une des revendications 1 à 4, caractérisés en ce que les pré-polymères de polyuréthannes ont été produits par utilisation de diols linéaires, en particulier de polypropylèneglycols, le cas échéant en mélange avec des polyétherpolyols, des polyesterspolyols, des polyacétals et/ou des polyalcoylènediols.

**6.** Polyuréthannes terminés par un alcoxysilane selon l'une des revendications 1 à 5, caractérisés en ce que les pré-polymères de polyuréthannes ayant une fonctionnalité moyenne en NCO d'au moins 2, ont été mis à réagir avec des alcools monofonctionnels aliphatiques et/ou des monoalcoylpolyétheralcools, ayant un poids moléculaire allant de 1000 à 2000.

**7.** Polyuréthannes terminés par un alcoxysilane selon l'une des revendications 1 à 6, caractérisés en ce que la fonctionnalité moyenne en NCO des pré-polymères de polyuréthannes terminés par un NCO se situe entre 1,2 et 1,8.

**8.** Utilisation de polyuréthannes terminés par un alcoxysilane qui durcissent à l'humidité selon l'une des revendications 1 à 7 en tant que masses d'étanchéité et/ou masses d'adhésion, le cas échéant conjointement à des additifs habituels comme des pigments des substances de remplissage, des agents stabilisants aux UV, des catalyseurs de durcissement et/ou des accélérateurs de durcissement.